# EUROPÄISCHE PATENTSCHRIFT

(11) **EP 3 747 307 B1**
(45) Veröffentlichungstag und Bekanntmachung des Hinweises auf die Patenterteilung: **27.09.2023**
(21) Anmeldenummer: 20178710.8
(22) Anmeldetag: 08.06.2020
(51) Int. Cl.: A45F 3/04, A45F 4/02, B62J 9/00

(54) **MULTIFUNKTIONSTASCHE, DIE ALS RUCKSACK ODER ALS PACKTASCHE VERWENDBAR IST**
MULTIFUNCTIONAL BAG USABLE AS A BACKPACK OR AS A PANNIER
SAC MULTIFONCTION POUVANT ÊTRE UTILISÉ EN TANT QUE SAC À DOS OU SAC DE TRANSPORT

(30) Priorität: 07.06.2019 DE 102019208318
(43) Veröffentlichungstag der Anmeldung: 09.12.2020
(73) Patentinhaber: otinga GmbH, 10827 Berlin (DE)
(72) Erfinder: Mellies, Leander, 52074 Aachen (DE); Fischer, Karl, 52064 Aachen (DE)
(74) Vertreter: Grünecker Patent- und Rechtsanwälte PartG mbB

(56) Entgegenhaltungen:
- CN-U- 203 774 824
- DE-U1-202007 002 028
- FR-A3- 2 713 456

## Beschreibung

Die vorliegende Erfindung betrifft eine Multifunktionstasche, die wahlweise als Rucksack oder als Packtasche verwendbar ist. Diese Multifunktionstasche umfasst: einen Körper mit wenigstens einem Verstaufach, Tragegurte zum Tragen der Multifunktionstasche als Rucksack auf dem Rücken, und eine Haltevorrichtung zur Anbringung der Multifunktionstasche als Packtasche an einem Träger, insbesondere an einem Gepäckträger eines Fahrrads.

Aus der DE 20 2010 000 734 U1 ist ein Rucksack mit Haltevorrichtung zur Verwendung als Packtasche bekannt, wobei eine an der Rückseite angeordnete, abnehmbare Vorrichtung, die das Tragen auf dem Rücken ermöglicht, komprimierbar, faltbar und/oder rollbar ausgeführt ist und in einem Verstaubereich am oder im Rucksack bei Nichtgebrauch unterbringbar ist.

FR 2 173 456 A3 und DE 20 2007 002 028 U1 zeigen weitere Rucksäcke mit Haltevorrichtung zur Verwendung als Packtasche gemäß dem Stand der Technik.

Dieser aus dem Stand der Technik bekannte Rucksack erfordert zur Umrüstung in eine Packtasche einen erheblichen Aufwand durch das Entfernen und Verstauen der abnehmbaren Vorrichtung. Zudem erstreckt sich die abnehmbare Vorrichtung über die gesamte Rückseite des Rucksacks und ist damit vergleichsweise sperrig. Dadurch vereinnahmt die abnehmbare Vorrichtung zu deren Unterbringung einen erheblichen Stauraum und verringert folglich das frei verfügbare Volumen des Rucksacks.

Vor diesem Hintergrund liegt der vorliegenden Erfindung die Aufgabe zugrunde, eine wahlweise als Rucksack oder als Packtasche verwendbare Multifunktionstasche bereitzustellen, die besonders einfach für die unterschiedlichen Verwendungszwecke umgerüstet werden kann.

Zur Lösung dieser Aufgabe stellt die vorliegende Erfindung die Multifunktionstasche nach Anspruch 1 bereit, welche umfasst: einen Körper mit wenigstens einem Verstaufach, Tragegurte zum Tragen der Multifunktionstasche als Rucksack auf dem Rücken, eine Haltevorrichtung zur Anbringung der Multifunktionstasche als Packtasche an einem Träger, insbesondere an einem Gepäckträger eines Fahrrads, und eine am Körper befestigte Klappe, die zwischen einer ersten Stellung und einer zweiten Stellung überführbar ist, wobei die Klappe in der ersten Stellung die Tragegurte freigibt und die Haltevorrichtung verdeckt, sodass die Multifunktionstasche als Rucksack nutzbar ist, und wobei die Klappe in der zweiten Stellung die Tragegurte verdeckt und die Haltevorrichtung freigibt, sodass die Multifunktionstasche als Packtasche nutzbar ist, wobei, die Tragegurte und/oder die Haltevorrichtung an der Klappe befestigt ist/sind. Bei der erfindungsgemäßen Multifunktionstasche sind die jeweiligen Funktionselemente, nämlich einerseits die Tragegurte zur Verwendung als Rucksack und andererseits die Haltevorrichtung zur Verwendung als Packtasche, fester Bestandteil der Multifunktionstasche. Folglich sind keine gesonderten Funktionselemente mitzuführen oder zur Änderung des Verwendungszwecks der Multifunktionstasche an- oder abzumontieren. Die Änderung des Verwendungszwecks der erfindungsgemäßen Multifunktionstasche kann einfach durch Überführen der Klappe zwischen der ersten und der zweiten Stellung bewerkstelligt werden, sodass die eingangs genannte Aufgabe gelöst wird.

Vorteilhafte Weiterbildungen der Erfindung sind Gegenstände der Unteransprüche.

Es kann sinnvoll sein, wenn die Klappe in der ersten Stellung und/oder in der zweiten Stellung am Körper der Multifunktionstasche arretierbar ist, vorzugsweise mit jeweils einem Reißverschluss oder wenigstens einem Magneten und/oder wenigstens einer Rasteinrichtung. Dadurch kann ein unbeabsichtigtes Überführen der Klappe zwischen der ersten und der zweiten Stellung verhindert werden. Zudem kann durch Arretierung der Klappe in der ersten Stellung und/oder in der zweiten Stellung eine Struktur der Multifunktionstasche verstärkt werden. Alternativ dazu kann die Klappe in der ersten Stellung und/oder in der zweiten Stellung auch mit anderen Elementen anstelle eines Reißverschlusses, wie z. B. einem Magnet oder einer Rasteinrichtung (z. B. Druckknopf) arretiert werden. Die Arretiermechanismen können auch kombiniert werden. So kann z.B. ein Magnet mit einem Einrastmechanismus verwendet werden.

Es kann aber auch nützlich sein, wenn die Klappe schwenkbar am Körper der Multifunktionstasche befestigt ist, vorzugsweise um eine Achse, die mittig über die Rückseite der Multifunktionstasche verläuft (in links-rechts-Richtung, d. h. zwischen den oberen und unteren Aufhängungspunkten der Tragegurte hindurch, oder in oben-unten-Richtung, d. h. zwischen dem einen und dem anderen Tragegurt), wobei die Klappe besonders bevorzugt in der ersten Stellung die untere Hälfte der Rückseite der Multifunktionstasche bildet und in der zweiten Stellung die obere Hälfte der Rückseite der Multifunktionstasche bildet, oder umgekehrt. Bei dieser Ausführung lässt sich die Klappe besonders gut mit dem Körper der Multifunktionstasche kombinieren. Die Klappe weist hierbei vorzugsweise einen rechteckigen Umriss auf, ebenso wie die Rückseite der Multifunktionstasche. Allerdings ist die Klappe nur halb so groß wie die Rückseite der Multifunktionstasche, sodass die Klappe zwischen einer oberen und unteren Stellung bzw. zwischen der ersten und der zweiten Stellung verschwenkt werden kann.

Es kann nützlich sein, wenn vorzugsweise obere oder untere Enden der Tragegurte an der Klappe befestigt sind, bevorzugt auf unterschiedlichen Seiten der Klappe, wobei besonders bevorzugt ein Bereich der Tragegurte zwischen den oberen und unteren Enden mit wenigstens einem Magneten und/oder wenigstens einer Rasteinrichtung am Körper der Multifunktionstasche und/oder an der Klappe arretierbar ist. Bei dieser Ausführung kann das für den jeweiligen Verwendungszweck der Multifunktionstasche benötigte Funktionselement (Tragegurte oder Haltevorrichtung) besonders einfach bereitgestellt und freigelegt werden, während das für den jeweiligen Verwendungszweck der Multifunktionstasche nicht benötigte Funktionselement (Tragegurte oder Haltevorrichtung) gleichzeitig besonders leicht verdeckt werden kann.

Es kann überdies sinnvoll sein, wenn die Klappe in der ersten Stellung gemeinsam mit dem Körper der Multifunktionstasche eine Tasche zur Verstauung der verdeckten Haltevorrichtung bildet, wobei vorzugsweise eine erste Seite der Klappe zumindest abschnittsweise die Rückseite der Multifunktionstasche bildet und eine zweite Seite der Klappe innerhalb dieser Tasche liegt, und/oder wobei die Klappe in der zweiten Stellung gemeinsam mit dem Körper der Multifunktionstasche eine Tasche zur Verstauung der verdeckten Tragegurte bildet, wobei vorzugsweise die erste Seite der Klappe innerhalb dieser Tasche liegt und die zweite Seite der Klappe zumindest abschnittsweise die Rückseite der Multifunktionstasche bildet, wobei die Tasche/-n vorzugsweise wasserdicht verschließbar ausgebildet ist/sind, bevorzugt mit jeweils einem Reißverschluss oder wenigstens einem Magneten und/oder wenigstens einer Rasteinrichtung. Gerade bei der Verwendung der Multifunktionstasche als Packtasche besteht das Problem, dass die Tragegurte in die Speichen eines Fahrrads gelangen könnten, an welchem die Multifunktionstasche befestigt ist. Freiliegende Tragegurte stellen daher in der Praxis ein großes Sicherheitsrisiko dar. Bei dieser Ausführung der Multifunktionstasche können die Tragegurte sicher in der Tasche verstaut werden, ohne dass Teile der Tragegurte heraushängen und sich ungewollt an anderen Objekten verfangen könnten. Ferner bietet die Verstauung des für den jeweiligen Verwendungszweck der Multifunktionstasche nicht benötigten Funktionselements (Tragegurte oder Haltevorrichtung) den Vorteil, dass dieses vor Regen oder Witterungseinflüssen im Allgemeinen geschützt ist. Gerade bei der Verwendung als Packtasche ist selbige starken Belastungen durch Erschütterungen des Fahrrads oder Spritzwasser ausgesetzt. Bei einer anschließenden Verwendung der Multifunktionstasche als Rucksack ist es für den Benutzer besonders angenehm, wenn die Tragegurte nicht etwa von Spritz- oder Regenwasser durchnässt sind.

Es kann aber auch sinnvoll sein, wenn die Klappe eine Versteifungsplatte vorzugsweise aus Kunststoff oder Metall aufweist, wobei bevorzugt die Haltevorrichtung mit dieser Versteifungsplatte fest verbunden ist, besonders bevorzugt formschlüssig. Durch die Versteifungsplatte kann einerseits die Haltevorrichtung besonders lagesicher im Verhältnis zum Körper der Multifunktionstasche positioniert werden. Andererseits kann das Gewicht der Multifunktionstasche bei Lastaufnahme über die Haltevorrichtung besonders gut über die Versteifungsplatte verteilt werden. Zudem wird die Struktur der Multifunktionstasche durch die Versteifungsplatte verstärkt.

Es kann aber auch nützlich sein, wenn die Klappe aus zwei miteinander verbundenen Schichten aus flexiblem Textil gebildet ist, wobei die Schichten vorzugsweise jeweils abschnittsweise und beide gemeinsam eine Rückwand des Körpers der Multifunktionstasche bilden, wobei sich die Schichten bevorzugt kontinuierlich über die Klappe und die Rückwand des Körpers der Multifunktionstasche erstrecken. Die Klappe kann bei dieser Ausführung in Sandwichbauart besonders einfach hergestellt und mit dem Körper der Multifunktionstasche verbunden werden. Die Versteifungsplatte der Klappe kann sich zwischen den miteinander verbundenen Schichten befinden, wobei die Schichten umfangseitig um die Versteifungsplatte aneinander befestigt, insbesondere vernäht sein können. Wenn sich die Schichten kontinuierlich über die Klappe und die Rückwand des Körpers der Multifunktionstasche erstrecken, kann in beiden Klappenstellungen ein lückenloser Übergang zwischen dem Körper der Multifunktionstasche und der daran befestigten Klappe bewerkstelligt werden. Die Rückseite der Multifunktionstasche wird dabei in jeder der beiden Klappenstellungen von einer kontinuierlichen Schicht aus flexiblem Textil gebildet, während die jeweils andere Schicht an der von der Rückseite der Multifunktionstasche abgewandten Innenseite der Klappe zusammengefaltet ist und das für den jeweiligen Verwendungszweck nicht benötigte Funktionselement (Tragegurte oder Haltevorrichtung) damit verdeckt wird. Durch die kontinuierliche Textilschicht an der Rückseite der Multifunktionstasche wird das Eindringen von Feuchtigkeit in das Verstaufach verhindert.

Es kann sich auch als vorteilhaft erweisen, wenn die Haltevorrichtung zwei Haken zum Übergreifen des Trägers aufweist und vorzugsweise jeder Haken eine eigene Arretierung, bevorzugt einen Schnappverschluss, zur Sicherung des Hakens am Träger aufweist. Derartige Haltevorrichtungen sind zur Befestigung von Packtaschen an Fahrradgepäckträgern nützlich. Es kann auch sinnvoll sein, wenn die Abstände der beiden Haken entlang einer Linie verstellbar sein. Zudem kann es nützlich sein, wenn die Haltevorrichtung einen dritten Haken zur Befestigung an einem Fahrradrahmen aufweist. Mit einer derartigen Haltevorrichtung kann die Packtasche stabil an gängigen Fahrrädern und Fahrradgepäckträgern befestigt werden.

Es kann auch praktisch sein, wenn die Klappe eine Polsterung aufweist, vorzugsweise an wenigstens einer Seite oder an beiden Seiten. Insbesondere bei der Verwendung der Multifunktionstasche als Rucksack befindet sich die Klappe in direktem Kontakt mit dem Rücken eines Benutzers. Um dem Benutzer ein angenehmes Tragegefühl zu vermitteln, erweist es sich als zweckdienlich, wenn die Klappe gepolstert ist.

Es kann aber auch nützlich sein, wenn die Multifunktionstasche eine Versteifungsplatte aufweist, die sich vorzugsweise über die gesamte Rückwand des Körpers der Multifunktionstasche erstreckt, wobei der Körper der Multifunktionstasche bevorzugt an der von dem Verstaufach abgewandten Seite der Versteifungsplatte eine Polsterung aufweist. Die Versteifungsplatte verleiht dem Körper der Multifunktionstasche eine gewisse Struktur, die sinnvoll ist, um insbesondere bei der Verwendung als Packtasche eine stabile Befestigung an gängigen Fahrrädern und Fahrradgepäckträgern zu bewerkstelligen.

Es kann sich als zweckdienlich erweisen, wenn die Klappe untrennbar mit dem Körper der Multifunktionstasche verbunden ist. Dadurch wird verhindert, dass sich die Klappe unbeabsichtigt von dem Körper der Multifunktionstasche lösen kann.

Es kann hilfreich sein, wenn jeder Tragegurt eine Polsterung aufweist, wobei die Polsterung vorzugsweise eine Schwächung oder Unterbrechung aufweist, um ein Knicken des Tragegurts zur platzsparenden Anordnung desselben in der zweiten Stellung der Klappe zu ermöglichen. Die Verstauung der Tragegurte bei Verwendung der Multifunktionstasche als Packtasche stellt ein zentrales Problem dar. Einerseits ist die Polsterung der Tragegurte erforderlich, um einen Tragekomfort zu bieten, andererseits werden die Tragegurte gerade aufgrund der Polsterung sperrig und schwer verstaubar. Durch eine gezielte Schwächung oder Unterbrechung der Polsterung kann das Knickverhalten der Tragegurte gezielt beeinflusst werden. Insbesondere kann es sich als sinnvoll erweisen, wenn die Tragegurte nicht übereinanderliegend geknickt oder gefaltet werden, sondern so, dass die Tragegurte besonders flach an der Rückseite der Multifunktionstasche anliegen und dabei sich möglichst flächig über den von der Klappe verdeckten Bereich erstrecken. Insbesondere kann es sinnvoll sein, wenn die Knicklinie nicht senkrecht zur Längsrichtung des Tragegurts verläuft, sondern schräg dazu, sodass jeder geknickte Tragegurt eine V-förmige (bei einer Knicklinie), N-förmige (bei zwei Knicklinien) oder gar W-förmige (bei drei Knicklinien) Anordnung einnehmen kann.

Es kann aber auch sinnvoll sein, wenn jeder Tragegurt aus flexiblem Textil im Wesentlichen schlauchförmig ausgebildet ist und die Polsterung im Inneren davon angeordnet ist, wobei die Schwächung oder Unterbrechung der Polsterung durch wenigstens eine Quernaht unter Verbindung gegenüberliegender Innenwände des schlauchförmigen Textils erzielt ist. Durch derartige Quernähte wird die Knickbeständigkeit jedes Tragegurts an den gewünschten Stellen gezielt herabgesetzt, sodass jeder Tragegurt beim Überführen der Klappe in die zweite Stellung idealerweise von alleine die gewünschte, platzsparende Anordnung einnimmt.

Es kann sich auch als praktisch erweisen, wenn die Klappe in der ersten Stellung bündig an einen angrenzenden Abschnitt des Körpers der Multifunktionstasche anschließt, um gemeinsam mit diesem eine ebene Anlagefläche am Rücken eines Benutzers zur Verwendung der Multifunktionstasche als Rucksack zu bilden. Dadurch wird einem Benutzer der Multifunktionstasche ein besonders angenehmes Tragegefühl vermittelt.

Es kann aber auch sinnvoll sein, wenn der Körper der Multifunktionstasche und vorzugsweise eine Versteifungsplatte im Körper der Multifunktionstasche wenigstens eine Ausnehmung zur Aufnahme der Haltevorrichtung in der ersten Stellung der Klappe aufweist/aufweisen. Dadurch kann die Haltevorrichtung in der ersten Stellung der Klappe besonders platzsparend und wenig störend verstaut werden.

Weitere bevorzugte Weiterbildungen der Erfindungen ergeben sich durch Kombinationen der Merkmale, die in den Ansprüchen, den Figuren und in der Beschreibung offenbart sind.

### Kurze Beschreibung der Zeichnungen

Es zeigen:
Fig. 1 eine schematische Ansicht der Rückseite der Multifunktionstasche nach einem ersten Ausführungsbeispiel der Erfindung in der ersten Stellung der Klappe, in welcher die Klappe die Tragegurte freigibt und die Haltevorrichtung verdeckt, sodass die Multifunktionstasche als Rucksack nutzbar ist.
Fig. 2 eine schematische Ansicht der Rückseite der Multifunktionstasche nach dem ersten Ausführungsbeispiel in der zweiten Stellung der Klappe, in welcher die Klappe die Tragegurte verdeckt und die Haltevorrichtung freigibt, sodass die Multifunktionstasche als Packtasche nutzbar ist.
Fig. 3 eine schematische Seitenansicht der Multifunktionstasche gemäß Fig. 1.
Fig. 4 eine schematische Seitenansicht der Multifunktionstasche gemäß Fig. 2.
Fig. 5 eine schematische Ansicht der Rückseite der Multifunktionstasche nach einem zweiten Ausführungsbeispiel der Erfindung in der ersten Stellung der Klappe, in welcher die Klappe die Tragegurte freigibt und die Haltevorrichtung verdeckt, sodass die Multifunktionstasche als Rucksack nutzbar ist.
Fig. 6 eine schematische Ansicht der Rückseite der Multifunktionstasche nach dem zweiten Ausführungsbeispiel in der zweiten Stellung der Klappe, in welcher die Klappe die Tragegurte verdeckt und die Haltevorrichtung freigibt, sodass die Multifunktionstasche als Packtasche nutzbar ist.
Fig. 7 eine schematische Seitenansicht der Multifunktionstasche gemäß Fig. 5.
Fig. 8 eine schematische Seitenansicht der Multifunktionstasche gemäß Fig. 6.
Fig. 9 eine schematische Ansicht der Rückseite der Multifunktionstasche nach einem dritten Ausführungsbeispiel der Erfindung in der ersten Stellung der Klappe, in welcher die Klappe die Tragegurte freigibt und die Haltevorrichtung verdeckt, sodass die Multifunktionstasche als Rucksack nutzbar ist.
Fig. 10 eine schematische Ansicht der Rückseite der Multifunktionstasche nach dem dritten Ausführungsbeispiel in der zweiten Stellung der Klappe, in welcher die Klappe die Tragegurte verdeckt und die Haltevorrichtung freigibt, sodass die Multifunktionstasche als Packtasche nutzbar ist.
Fig. 11 eine schematische Seitenansicht der Multifunktionstasche gemäß Fig. 9.
Fig. 12 eine schematische Seitenansicht der Multifunktionstasche gemäß Fig. 10.

### Detaillierte Beschreibung der bevorzugten Ausführungsbeispiele

Die bevorzugten Ausführungsbeispiele der Erfindung werden nachstehend mit Bezug auf die beiliegenden Zeichnungen im Detail beschrieben.

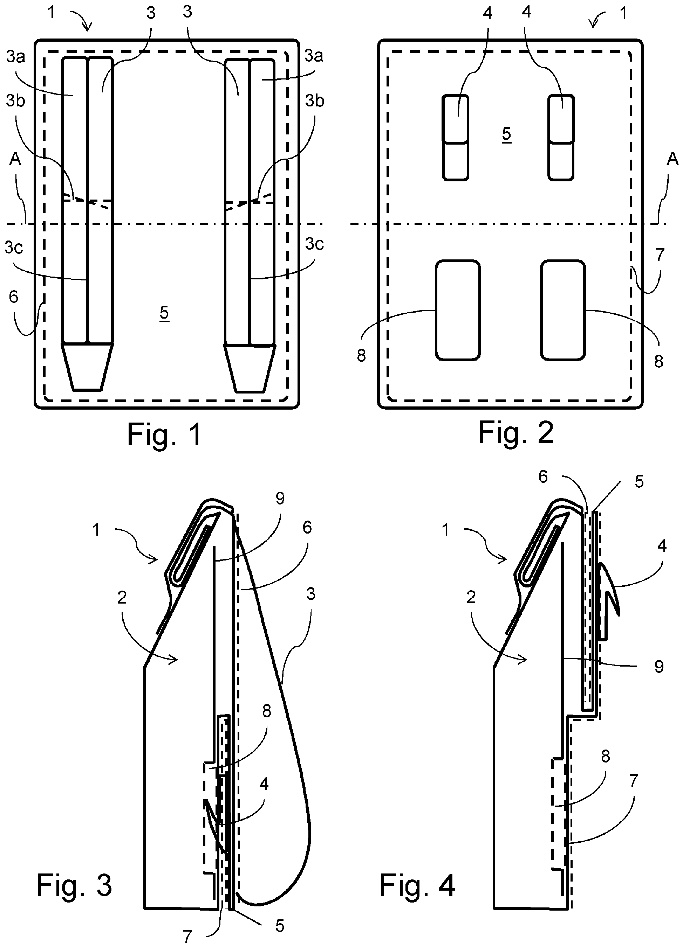

### Erstes Ausführungsbeispiel (Fig. 1 bis 4)

Die beiliegenden Figuren 1 bis 4 zeigen die erfindungsgemäße Multifunktionstasche 1 nach dem ersten Ausführungsbeispiel der Erfindung schematisch in Rückansicht bzw. Seitenansicht, mit Blick auf die wesentlichen Details. Unwesentliche Details sind zu Darstellungszwecken weggelassen oder vereinfachend dargestellt.

Die erfindungsgemäße Multifunktionstasche 1 umfasst einen Körper mit wenigstens einem Verstaufach 2 und unterschiedlichen Funktionselementen für die unterschiedlichen Verwendungszwecke der Multifunktionstasche, nämlich einerseits Tragegurte 3 zum Tragen der Multifunktionstasche 1 als Rucksack auf dem Rücken, und andererseits eine Haltevorrichtung 4 zur Anbringung der Multifunktionstasche 1 als Packtasche an einem Träger, insbesondere an einem Gepäckträger eines Fahrrads. Die Multifunktionstasche 1 kann eine Versteifungsplatte 9 aufweisen, die sich über die gesamte Rückwand des Körpers der Multifunktionstasche 1 erstreckt, wobei der Körper der Multifunktionstasche 1 gegebenenfalls an der von dem Verstaufach 2 abgewandten Seite der Versteifungsplatte 9 eine Polsterung aufweist, um den Tragekomfort insbesondere bei der Verwendung der Multifunktionstasche 1 als Rucksack zu erhöhen.

Im vorliegenden Ausführungsbeispiel umfasst der Körper der Multifunktionstasche 1 ein großes, sackförmiges Verstaufach 2 aus flexiblem Textil gegebenenfalls mit wasserfester Beschichtung bzw. Gummierung. Das Verstaufach 2 ist mit einem hermetischen Rollverschluss verschließbar. Dabei wird das obere Ende des Verstaufachs 2 unter Verschluss der Zugangsöffnung eingerollt und im eingerollten Zustand mit einem Haken an einer von mehreren Ösen an der Außenseite des Verstaufachs 2 fixiert, wie in den Figuren 3 und 4 dargestellt ist.

Am Körper der Multifunktionstasche 1 bzw. an dessen Rückseite befindet sich eine Klappe 5, die aus zwei miteinander verbundenen Schichten aus flexiblem Textil gebildet ist und um eine Achse A schwenkbar am Körper der Multifunktionstasche 1 befestigt ist. Bei bestimmungsgemäßer Anwendung der Multifunktionstasche 1 als Rucksack oder Packtasche ist die Achse A horizontal ausgerichtet und verläuft in links-rechts-Richtung mittig über die Rückseite der Multifunktionstasche 1 zwischen den oberen und unteren Aufhängungspunkten der Tragegurte 3 hindurch. Die Klappe 5 weist ebenso wie die Rückseite des Körpers der Multifunktionstasche 1 einen rechteckigen Umriss auf, ist aber nur halb so groß. Die beiden die Klappe 5 bildenden Textilschichten bilden jeweils zur Hälfte und folglich beide gemeinsam eine Rückwand des Körpers der Multifunktionstasche 1 und erstrecken kontinuierlich über Klappe 5 und die Rückwand des Körpers der Multifunktionstasche 1 hinweg, wie in den Figuren 3 und 4 zu erkennen ist. Die Klappe 5 weist eine Versteifungsplatte (nicht dargestellt) aus Kunststoff oder Metall auf, an welcher die Haltevorrichtung 4 formschlüssig befestigt ist. Durch die Versteifungsplatte wird die Klappe 5 einerseits ausgesteift, andererseits wird die Haltevorrichtung 4 in Bezug auf den Körper der Multifunktionstasche 1 lagesicher positioniert. Dadurch wird sichergestellt, dass sich die Multifunktionstasche 1 im Anwendungsfall als Packtasche nicht ungewollt bewegt oder verformt.

Erfindungsgemäß ist die mit dem Körper der Multifunktionstasche 1 untrennbar verbundene Klappe 5 zwischen einer ersten Stellung und einer zweiten Stellung überführbar. In der ersten bzw. unteren Stellung ("Rucksackstellung"), in welcher die Klappe 5 die untere Hälfte der Rückseite der Multifunktionstasche 1 bildet (vgl. Figuren 1 und 3), gibt die Klappe 5 die Tragegurte 3 frei und verdeckt die Haltevorrichtung 4, sodass die Multifunktionstasche 1 als Rucksack nutzbar ist. In der zweiten bzw. oberen Stellung ("Packtaschenstellung"), in welcher die Klappe 5 die obere Hälfte der Rückseite der Multifunktionstasche 1 bildet (vgl. Figuren 2 und 4), verdeckt sie die Tragegurte 3 und gibt die Haltevorrichtung 4 frei, sodass die Multifunktionstasche 1 als Packtasche nutzbar ist. Bei dieser Ausführung sind die oberen Enden der Tragegurte 3 fest mit dem Körper 1 der Multifunktionstasche verbunden bzw. vernäht, während die untere Enden der Tragegurte 3 sowie die Haltevorrichtung 4 auf unterschiedlichen Seiten der Klappe 5 angeordnet und mit selbiger verbunden sind.

Dabei bildet die Klappe 5 in der ersten Stellung gemeinsam mit dem Körper der Multifunktionstasche 1 eine Tasche zur Verstauung der verdeckten Haltevorrichtung 4, wobei eine erste Seite der Klappe 5 die untere Hälfte der Rückseite der Multifunktionstasche 1 bildet und eine zweite Seite der Klappe 5, an welcher die Haltevorrichtung 4 angeordnet ist, innerhalb dieser Tasche liegt (Figuren 1 und 3). In der zweiten Stellung bildet die Klappe 5 gemeinsam mit dem Körper der Multifunktionstasche 1 eine weitere Tasche zur Verstauung der verdeckten Tragegurte 3, wobei dann die erste Seite der Klappe 5 innerhalb dieser Tasche liegt und die zweite Seite der Klappe 5, an welcher die Haltevorrichtung 4 angeordnet ist, die obere Hälfte die Rückseite der Multifunktionstasche 1 bildet (Figuren 2 und 4). Vorzugsweise können beide die Taschen mit jeweils einem Reißverschluss 6, 7 wasserdicht verschlossen werden. Jeder Reißverschluss 6, 7 umrandet eine Schicht aus flexiblem Textil, die sich kontinuierlich über die Rückseite des Körpers der Multifunktionstasche 1 und die Klappe 5 erstreckt. Genauer gesagt erstreckt sich je eine Hälfte jedes Reißverschlusses 6, 7 im Wesentlichen U-förmig entlang der Außenränder der Klappe 5, während sich die jeweils ergänzende Hälfte jedes Reißverschlusses 6, 7 im wesentlichen U-förmig entlang der jeweils angrenzenden bzw. zugewandten oberen oder unteren Hälfte der Rückseite der Multifunktionstasche 1 erstreckt. Wird die Klappe 5 in Anlage zu dieser angrenzenden oberen oder unteren Hälfte der Rückseite der Multifunktionstasche 1 gebracht, so kann der Reißverschluss 6, 7 durch einen entsprechenden Schieber verschlossen werden. Sowohl in der ersten Stellung als auch in der zweiten Stellung ist die Klappe 5 somit durch jeweils einen der Reißverschlüsse 6, 7 am Körper der Multifunktionstasche 1 arretierbar. Insbesondere die erste Seite der Klappe 5 weist eine Polsterung auf, um den Tragekomfort bei Verwendung der Multifunktionstasche 1 als Rucksack zu erhöhen.

Zudem kann jeder Tragegurt 3 eine Polsterung 3a aufweisen. Um ein Knicken des Tragegurts 3 zur platzsparenden Anordnung desselben in der zweiten Stellung der Klappe 5 zu ermöglichen, ist es hilfreich, wenn die Polsterung 3a eine Schwächung oder Unterbrechung 3b aufweist. Beispielsweise ist jeder Tragegurt 3 aus flexiblem Textil im Wesentlichen schlauchförmig ausgebildet, wobei die Polsterung 3a im Inneren davon angeordnet ist, während eine Längsnaht 3c die gegenüberliegenden Innenwände des schlauchförmigen Textils verbindet. Die Schwächung oder Unterbrechung der Polsterung 3b kann durch Quernähte 3b unter Verbindung gegenüberliegender Innenwände des schlauchförmigen Textils erzielt werden. In Figur 1 sind verschiedene Quernähte 3b gezeigt, welche nicht alle exakt rechtwinklig zur Längsnaht 3c verlaufen, sondern schräg dazu, sodass die untere Hälfte des Tragegurts 3 schräg zur oberen Hälfte des Tragegurts 3 geknickt werden kann und der Tragegurt 3 im geknickten Zustand eine V-förmige Anordnung einnehmen kann. Dabei ist es besonders sinnvoll, dass die geknickten Abschnitte des Tragegurts 3 möglichst nicht mehrlagig übereinanderliegen, sondern möglichst flach an der Rückseite des Körpers 1 der Multifunktionstasche 1 anliegen, sodass die Klappe 5 beim Überführen in die zweite Stellung ebenfalls dicht an der Rückseite des Körpers 1 der Multifunktionstasche 1 anliegen kann.

Natürlich ist es abweichend von dem dargestellten Ausführungsbeispiel auch möglich, dass die Haltevorrichtung 4 und die unteren Enden der Tragegurte 3 unmittelbar an der Rückseite des Körpers der Multifunktionstasche 1 befestigt sind, während die oberen Enden der Tragegurte 3 an der Klappe 5 befestigt sind. Bei dieser alternativen Ausführung, die in den Figuren nicht dargestellt ist, bildet die Klappe 5 in der ersten bzw. unteren Stellung ("Packtaschenstellung") die untere Hälfte der Rückseite der Multifunktionstasche 1 und verdeckt die Tragegurte 3, während sie die Haltevorrichtung 4 freigibt, sodass die Multifunktionstasche 1 als Packtasche nutzbar ist. In der zweiten bzw. oberen Stellung ("Rucksackstellung"), in welcher die Klappe 5 die obere Hälfte der Rückseite der Multifunktionstasche 1 bildet, gibt sie dagegen die Tragegurte 3 frei und verdeckt die Haltevorrichtung 4, sodass die Multifunktionstasche 1 als Rucksack nutzbar ist. Bei dieser alternativen Ausführung sind die oberen Aufhängungspunkte der Tragegurte 3, an denen das Gewicht der Multifunktionstasche 1 lastet, aber nicht mit dem Körper der Multifunktionstasche 1, sondern mit der Klappe 5 verbunden bzw. vernäht. Demnach ist es sinnvoller, wenn die oberen Enden der Tragegurte 3 direkt mit dem Körper 1 der Multifunktionstasche 1 verbunden bzw. vernäht sind, wie insbesondere in den Figuren 1 und 3 dargestellt ist.

Die Haltevorrichtung 4 weist zwei Haken zum Übergreifen des Trägers auf. Jeder Haken eine umfasst eine beispielsweise als Schnappverschluss ausgebildete Arretierung zur Sicherung des Hakens am Träger.

Zur Aufnahme der Haltevorrichtung 4 in der ersten Stellung der Klappe 5 weist/weisen die Multifunktionstasche 1 sowie gegebenenfalls die Versteifungsplatte 9 im Körper der Multifunktionstasche 1 entsprechende Ausnehmungen 8 auf. Wie in Figur 3 anschaulich dargestellt ist, kann jeder Haken der Haltevorrichtung 4 in der ersten Stellung der Klappe 5 in einer entsprechenden Ausnehmung 8 kompakt und platzsparend aufgenommen werden, sodass die Klappe 5 bündig an einen angrenzenden Abschnitt des Körpers der Multifunktionstasche 1 anschließt, um gemeinsam mit diesem eine ebene Anlagefläche am Rücken eines Benutzers zur Verwendung der Multifunktionstasche 1 als Rucksack zu bilden.

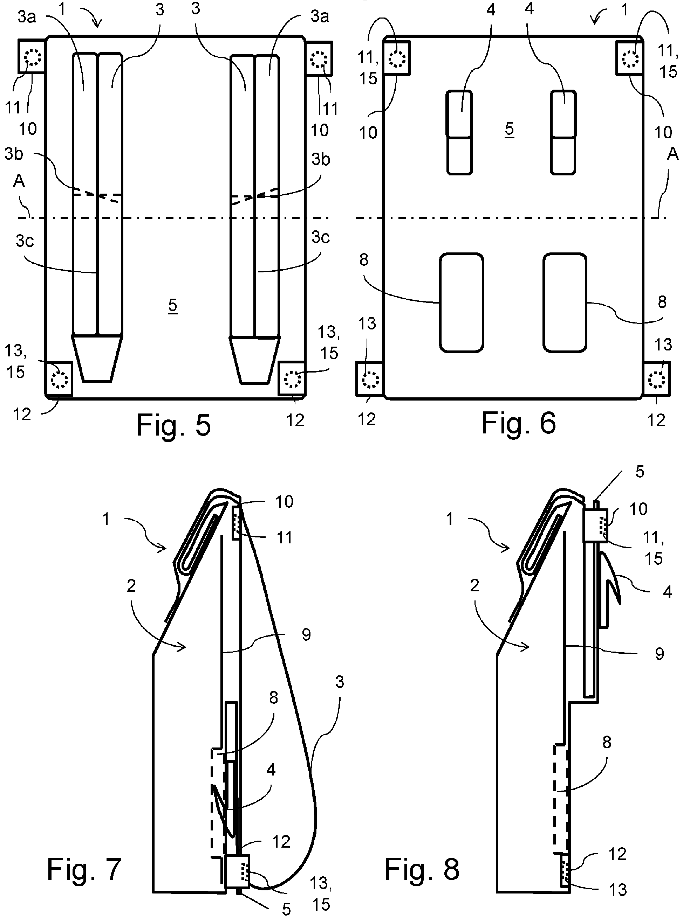

### Zweites Ausführungsbeispiel (Fig. 5 bis 8)

Die beiliegenden Figuren 5 bis 8 zeigen die erfindungsgemäße Multifunktionstasche 1 nach dem zweiten Ausführungsbeispiel der Erfindung schematisch in Rückansicht bzw. Seitenansicht, mit Blick auf die wesentlichen Details. Die Multifunktionstasche 1 nach dem zweiten Ausführungsbeispiel umfasst im Wesentlichen identische - und mit identischen Bezugszeichen versehene - Merkmale wie die Multifunktionstasche 1 nach dem ersten Ausführungsbeispiel, mit Ausnahme der folgenden Unterschiede:
Anstelle der Reißverschlüsse 6, 7 umfasst die Multifunktionstasche 1 nach dem zweiten Ausführungsbeispiel der Erfindung in der oberen und unteren Hälfte der Rückwand der Multifunktionstasche 1 jeweils seitlich befestigte Flügel 10, 12 mit eingearbeiteten (körperseitigen) Magneten 11, 13. Alternativ oder zusätzlich enthält jeder Flügel 10, 12 einen Rastmechanismus z. B. einen Druckknopf. Mit den Magneten 11, 13 kann die Klappe 5, die ebenfalls zwei (klappenseitige) Magnete 15 aufweist, wahlweise in der ersten Stellung oder in der zweiten Stellung am Körper der Multifunktionstasche 1 fixiert werden. In Fig. 5 sind die klappenseitigen Magnete 15 von den unteren Flügeln 12 bzw. den unteren körperseitigen Magneten 13 verdeckt, in Fig. 7 von den oberen Flügeln 10 bzw. den oberen körperseitigen Magneten 11. Die Positionen der körperseitigen und klappenseitigen Magnete 11, 13, 15 sind dabei so aufeinander abgestimmt, dass der wenigstens eine klappenseitige Magnet 15 sowohl in der ersten Stellung mit wenigstens einem körperseitigen Magnet 13, als auch in der zweiten Stellung mit wenigstens einem anderen körperseitigen Magnet 11 ein Magnetpaar bildet und mit diesem Magneten in Magnet- und ggf. Rasteingriff gelangen kann.

In Fig. 5 und 7 befinden sich die oberen Flügel 10 in einem entkoppelten Zustand, in welchem sie seitlich vom Körper der Multifunktionstasche 1 hervorstehen. Die unteren Flügel 12 befinden sich dagegen in einem mit der Klappe 5 gekoppelten Zustand, in welchem sie die Klappe 5 randseitig umgreifen und diese an der unteren Hälfte der Rückwand des Körpers der Multifunktionstasche 1 festhalten. Dabei stehen die Magnete 13 der unteren Flügel 12 mit den entsprechenden Magneten 15 der Klappe 5 in Magneteingriff.

In Fig. 6 und 8 befinden sich die oberen Flügel 10 in einem mit der Klappe 5 gekoppelten Zustand, in welchem sie die Klappe 5 randseitig umgreifen und diese an der oberen Hälfte der Rückwand des Körpers der Multifunktionstasche 1 festhalten. Die unteren Flügel 12 befindet sich dagegen in einem entkoppelten Zustand, in welchem sie seitlich vom Körper der Multifunktionstasche 1 hervorstehen.

Optional können die jeweils entkoppelten und nicht benötigten Flügel 10, 12 mit entsprechenden (körperseitigen) Magneten (nicht gezeigt) an den Seitenwänden der Multifunktionstasche 1 am Körper der Multifunktionstasche 1 festgehalten werden, sodass sie nicht vom Körper der Multifunktionstasche 1 abstehen. So kann verhindert werden, dass die Flügel 10, 12 umherschwingen und z.B. in die Speichen gelangen können, oder einfach bei der Benutzung der Multifunktionstasche 1 stören.

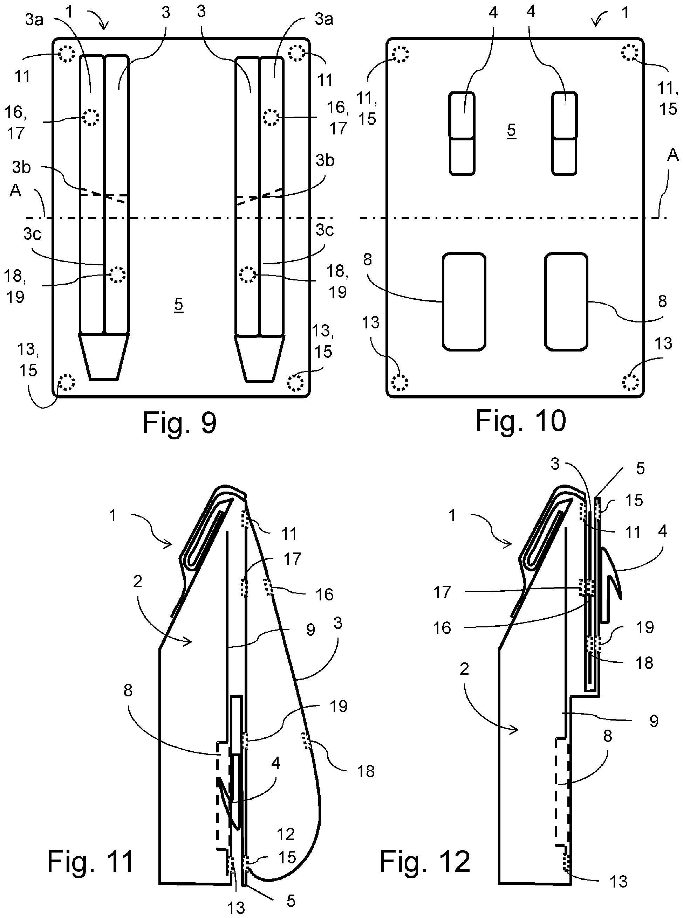

### Drittes Ausführungsbeispiel (Fig. 9 bis 12)

Die beiliegenden Figuren 9 bis 12 zeigen die erfindungsgemäße Multifunktionstasche 1 nach dem dritten Ausführungsbeispiel der Erfindung schematisch in Rückansicht bzw. Seitenansicht, mit Blick auf die wesentlichen Details. Die Multifunktionstasche 1 nach dem dritten Ausführungsbeispiel umfasst im Wesentlichen identische - und mit identischen Bezugszeichen versehene - Merkmale wie die Multifunktionstasche 1 nach dem zweiten Ausführungsbeispiel, mit Ausnahme der folgenden Unterschiede:
Abweichend vom zweiten Ausführungsbeispiel umfasst die Multifunktionstasche 1 nach dem dritten Ausführungsbeispiel keine Flügel 10, 12. Die körperseitigen Magnete 11, 13 sind direkt in die Rückwand des Körpers der Multifunktionstasche 1 eingearbeitet, z.B. in den beiden oberen und den beiden unteren Ecken. Die Klappe 5 weist z.B. in den Ecken an ihrem freien Ende zwei eigene (klappenseitige) Magnete 15 auf. Auch hierbei sind die Positionen der körperseitigen und klappenseitigen Magnete 11, 13, 15 so aufeinander abgestimmt, dass der wenigstens eine klappenseitige Magnet 15 sowohl in der ersten Stellung mit wenigstens einem körperseitigen Magnet 13, als auch in der zweiten Stellung mit wenigstens einem anderen körperseitigen Magnet 11 ein Magnetpaar bildet und mit diesem Magneten in Magnet- und ggf. Rasteingriff gelangen kann.

In Fig. 9 bzw. 11 stehen die klappenseitigen Magnete 15 mit den unteren körperseitigen Magneten 13 in Magneteingriff, in Fig. 10 bzw. 12 dagegen mit den oberen körperseitigen Magneten 11.

Zusätzlich können einerseits die Tragegurte 3 und andererseits die Rückwand und/oder die Klappe 5 der Multifunktionstasche 1 weitere gurtseitige bzw. körper- und/oder klappenseitige Magnete 16, 17, 18, 19 aufweisen, um die Tragegurte 3 beim Überführen der Klappe 5 von der ersten Stellung in die zweite Stellung optimal zu positionieren. So lassen sich die Tragegurte 3 besonders kompakt verstauen. In Fig. 9, 11 und 12 sind die gurtseitigen Magnete 16, 18 und die körper- bzw. klappenseitigen Magnete 17, 19 zur Arretierung der Tragegurte 3 schematisch dargestellt. Auch diese Magnete 16, 17, 18, 19 können eine Rastfunktion aufweisen. Wie in Fig. 11 ersichtlich, sind die gurtseitigen Magnete 16, 18 in der ersten Stellung der Klappe 5, d.h. in Gebrauchsstellung der Tragegurte 3, in der Regel von den entsprechenden körper- bzw. klappenseitigen Magneten 17, 19 beabstandet. Beim Überführen der Klappe 5 von der ersten Stellung in die zweite Stellung werden die gurtseitigen Magnete 16, 18 durch die magnetische Anziehungskraft auf die körper- bzw. klappenseitigen Magnete 17, 19 ausgerichtet. Wie in Fig. 12 dargestellt, befinden sich die gurtseitigen Magnete 16, 18 in der zweiten Stellung der Klappe 5, d.h. in Gebrauchsstellung der Haltevorrichtung 4, mit den entsprechenden körper- bzw. klappenseitigen Magneten 17, 19 in Magneteingriff. Durch die optionale Rastfunktion können die gurtseitigen Magnete 16, 18 an den körper- bzw. klappenseitigen Magnete 17, 19 einrasten und dadurch auch formschlüssig in der bestimmungsgemäßen Position gesichert werden.

Die Magnete 16, 17, 18, 19 zur Arretierung der Tragegurte 3 können auch bei den ersten beiden Ausführungsbeispielen Anwendung finden.

Alternativ oder zusätzlich zu den Magneten können auch Rasteinrichtungen wie Druckknöpfe oder magnetische Druckknöpfe verwendet werden. Überdies können auch verschiedene Befestigungsmittel in einem Ausführungsbeispiel kombiniert werden.

Weitere Abwandlungen der Erfindung im Schutzbereich der Patentansprüche sind ebenfalls denkbar.

### Bezugszeichenliste

- 1: Multifunktionstasche
- 2: Verstaufach
- 3: Tragegurte
- 4: Haltevorrichtung
- 5: Klappe
- 6: Reißverschluss
- 7: Reißverschluss
- 8: Ausnehmung
- 9: Versteifungsplatte
- 10: Flügel/Lasche (oben)
- 11: Magnet (Flügel/Lasche oben)
- 12: Flügel/Lasche (unten)
- 13: Magnet (Flügel/Lasche unten)
- 15: Magnet (in der Klappe)
- 16: Magnet (im Tragegurt)
- 17: Magnet (in der Rückwand der Multifunktionstasche)
- 18: Magnet (im Tragegurt)
- 19: Magnet (in der Klappe)

## Patentansprüche

1. Multifunktionstasche (1), umfassend:
- einen Körper mit wenigstens einem Verstaufach (2),
- Tragegurte (3) zum Tragen der Multifunktionstasche (1) als Rucksack auf dem Rücken,
- eine Haltevorrichtung (4) zur Anbringung der Multifunktionstasche (1) als Packtasche an einem Träger, insbesondere an einem Gepäckträger eines Fahrrads, und
- eine am Körper befestigte Klappe (5), die zwischen einer ersten Stellung und einer zweiten Stellung überführbar ist, wobei die Klappe (5) in der ersten Stellung die Tragegurte (3) freigibt und die Haltevorrichtung (4) verdeckt, sodass die Multifunktionstasche (1) als Rucksack nutzbar ist, und wobei die Klappe (5) in der zweiten Stellung die Tragegurte (3) verdeckt und die Haltevorrichtung (4) freigibt, sodass die Multifunktionstasche (1) als Packtasche nutzbar ist, **dadurch gekennzeichnet, dass** die Tragegurte (3) und/oder die Haltevorrichtung (4) an der Klappe (5) befestigt ist/sind.

2. Multifunktionstasche (1) nach Anspruch 1, **dadurch gekennzeichnet, dass** die Klappe (5) in der ersten Stellung und/oder in der zweiten Stellung am Körper der Multifunktionstasche (1) arretierbar ist, vorzugsweise mit jeweils einem Reißverschluss (6, 7) oder mit wenigstens einem Magneten (11, 13, 15) und/oder wenigstens einer Rasteinrichtung.

3. Multifunktionstasche (1) nach einem der vorangehenden Ansprüche, **dadurch gekennzeichnet, dass** die Klappe (5) schwenkbar am Körper der Multifunktionstasche (1) befestigt ist, vorzugsweise um eine Achse (A), die mittig über die Rückseite der Multifunktionstasche (1) verläuft, wobei die Klappe (5) besonders bevorzugt in der ersten Stellung die untere Hälfte der Rückseite der Multifunktionstasche (1) bildet und in der zweiten Stellung die obere Hälfte der Rückseite der Multifunktionstasche (1) bildet, oder umgekehrt.

4. Multifunktionstasche (1) nach einem der vorangehenden Ansprüche, **dadurch gekennzeichnet, dass** die Tragegurte (3), vorzugsweise deren obere oder untere Enden, und die Haltevorrichtung (4) auf unterschiedlichen Seiten der Klappe (5) befestigt sind, wobei bevorzugt ein Bereich der Tragegurte (3) zwischen den oberen und unteren Enden mit wenigstens einem Magneten (16, 17, 18, 19) und/oder wenigstens einer Rasteinrichtung am Körper der Multifunktionstasche (1) und/oder an der Klappe (5) arretierbar ist.

5. Multifunktionstasche (1) nach einem der vorangehenden Ansprüche, **dadurch gekennzeichnet, dass** die Klappe (5) in der ersten Stellung gemeinsam mit dem Körper der Multifunktionstasche (1) eine Tasche zur Verstauung der verdeckten Haltevorrichtung (4) bildet, wobei vorzugsweise eine erste Seite der Klappe (5) zumindest abschnittsweise die Rückseite der Multifunktionstasche (1) bildet und eine zweite Seite der Klappe (5) innerhalb dieser Tasche liegt, und/oder wobei die Klappe (5) in der zweiten Stellung gemeinsam mit dem Körper der Multifunktionstasche (1) eine Tasche zur Verstauung der verdeckten Tragegurte (3) bildet, wobei vorzugsweise die erste Seite der Klappe (5) innerhalb dieser Tasche liegt und die zweite Seite der Klappe (5) zumindest abschnittsweise die Rückseite der Multifunktionstasche (1) bildet, wobei die Tasche/-n vorzugsweise wasserdicht verschließbar ausgebildet ist/sind, bevorzugt mit jeweils einem Reißverschluss (6, 7) oder mit wenigstens einem Magneten (11, 13, 15) und/oder wenigstens einer Rasteinrichtung.

6. Multifunktionstasche (1) nach einem der vorangehenden Ansprüche, **dadurch gekennzeichnet, dass** die Klappe (5) eine Versteifungsplatte vorzugsweise aus Kunststoff oder Metall aufweist, wobei bevorzugt die Haltevorrichtung (4) mit dieser Versteifungsplatte fest verbunden ist, besonders bevorzugt formschlüssig.

7. Multifunktionstasche (1) nach einem der vorangehenden Ansprüche, **dadurch gekennzeichnet, dass** die Klappe (5) aus zwei miteinander verbundenen Schichten aus flexiblem Textil gebildet ist, wobei die Schichten vorzugsweise jeweils abschnittsweise und beide gemeinsam eine Rückwand des Körpers der Multifunktionstasche (1) bilden, wobei sich die Schichten bevorzugt kontinuierlich über die Klappe (5) und die Rückwand des Körpers der Multifunktionstasche (1) erstrecken.

8. Multifunktionstasche (1) nach einem der vorangehenden Ansprüche, **dadurch gekennzeichnet, dass** die Haltevorrichtung (4) zwei Haken zum Übergreifen des Trägers aufweist und vorzugsweise jeder Haken eine eigene Arretierung, bevorzugt einen Schnappverschluss, zur Sicherung des Hakens am Träger aufweist.

9. Multifunktionstasche (1) nach einem der vorangehenden Ansprüche, **dadurch gekennzeichnet, dass** die Klappe (5) eine Polsterung aufweist, vorzugsweise an wenigstens einer Seite oder an beiden Seiten.

10. Multifunktionstasche (1) nach einem der vorangehenden Ansprüche, **dadurch gekennzeichnet, dass** die Multifunktionstasche (1) eine Versteifungsplatte (9) aufweist, die sich vorzugsweise über die gesamte Rückwand des Körpers der Multifunktionstasche (1) erstreckt, wobei der Körper der Multifunktionstasche (1) bevorzugt an der von dem Verstaufach (2) abgewandten Seite der Versteifungsplatte (9) eine Polsterung aufweist.

11. Multifunktionstasche (1) nach einem der vorangehenden Ansprüche, **dadurch gekennzeichnet, dass** die Klappe (5) untrennbar mit dem Körper der Multifunktionstasche (1) verbunden ist.

12. Multifunktionstasche (1) nach einem der vorangehenden Ansprüche, **dadurch gekennzeichnet, dass** jeder Tragegurt (3) eine Polsterung (3a) aufweist, wobei die Polsterung (3a) vorzugsweise eine Schwächung oder Unterbrechung (3b) aufweist, um ein Knicken des Tragegurts (3) zur platzsparenden Anordnung desselben in der zweiten Stellung der Klappe (5) zu ermöglichen.

13. Multifunktionstasche (1) nach Anspruch 12, **dadurch gekennzeichnet, dass** jeder Tragegurt (3) aus flexiblem Textil im Wesentlichen schlauchförmig ausgebildet ist und die Polsterung (3a) im Inneren davon angeordnet ist, wobei die Schwächung oder Unterbrechung der Polsterung durch wenigstens eine Quernaht (3b) unter Verbindung gegenüberliegender Innenwände des schlauchförmigen Textils erzielt ist.

14. Multifunktionstasche (1) nach einem der vorangehenden Ansprüche, **dadurch gekennzeichnet, dass** die Klappe (5) in der ersten Stellung bündig an einen angrenzenden Abschnitt des Körpers der Multifunktionstasche (1) anschließt, um gemeinsam mit diesem eine ebene Anlagefläche am Rücken eines Benutzers zur Verwendung der Multifunktionstasche (1) als Rucksack zu bilden.

15. Multifunktionstasche (1) nach einem der vorangehenden Ansprüche, **dadurch gekennzeichnet, dass** der Körper der Multifunktionstasche (1) und vorzugsweise eine Versteifungsplatte (9) im Körper der Multifunktionstasche (1) wenigstens eine Ausnehmung (8) zur Aufnahme der Haltevorrichtung (4) in der ersten Stellung der Klappe (5) aufweist/aufweisen.

## Claims

1. Multifunctional bag (1), comprising:
- a body with at least one storage compartment (2),
- carrying straps (3) for carrying the multifunctional bag (1) as a backpack on the back,
- a holding device (4) for attaching the multifunctional bag (1) as a pannier to a carrier, in particular to a luggage carrier of a bicycle, and
- a flap (5) attached to the body, which is transferable between a first position and a second position, wherein the flap (5) in the first position releases the carrying straps (3) and covers the holding device (4), so that the multifunctional bag (1) can be used as a backpack, and wherein the flap (5) in the second position covers the carrying straps (3) and exposes the holding device (4) so that the multifunctional bag (1) can be used as a pannier, **characterized in that** the carrying straps (3) and/or the holding device (4) is/are fastened to the flap (5).

2. The multifunctional bag (1) according to claim 1, **characterized in that** the flap (5) can be locked in the first position and/or in the second position on the body of the multifunctional bag (1), preferably with a respective zip fastener (6, 7) or at least a magnet (11, 13, 15) and/or at least one latching device.

3. The multifunctional bag (1) according to one of the preceding claims, **characterized in that** the flap (5) is pivotally attached to the body of the multifunctional bag (1), preferably about an axis (A) which extends centrally over the back of the multifunctional bag (1), wherein the flap (5) more preferably forms the lower half of the back of the multifunctional bag (1) in the first position and forms the upper half of the back of the multifunctional bag (1) in the second position, or vice versa.

4. The multifunctional bag (1) according to one of the preceding claims, **characterized in that** the carrying straps (3), preferably the upper or lower ends thereof, and the holding device (4) are fastened on different sides of the flap (5), wherein preferably a region of the carrying straps (3) between the upper and lower ends can be locked to the body of the multifunctional bag (1) and/or to the flap (5) by at least one magnet (16, 17, 18, 19) and/or at least one latching device.

5. The multifunctional bag (1) according to one of the preceding claims, **characterized in that** the flap (5) in the first position forms, together with the body of the multifunctional bag (1), a pocket for stowing the concealed holding device (4), preferably a first side of the flap (5) forming, at least in sections, the rear side of the multifunctional bag (1) and a second side of the flap (5) lying inside this pocket, and/or the flap (5) in the second position forming, together with the body of the multifunctional bag (1), a pocket for stowing the concealed carrying straps (3), the first side of the flap (5) preferably lying inside this pocket and the second side of the flap (5) forming, at least in sections, the rear side of the multifunctional pocket (1), the pocket(s) preferably being designed such that they can be closed in a waterproof manner, preferably in each case with a zip fastener (6, 7) or with at least one magnet (11, 13, 15) and/or at least one latching device.

6. The multifunctional bag (1) according to one of the preceding claims, **characterized in that** the flap (5) has a stiffening plate preferably made of plastic or metal, wherein preferably the holding device (4) is firmly connected to this stiffening plate, more preferably form-fitti ng.

7. The multifunctional bag (1) according to one of the preceding claims, **characterized in that** the flap (5) is formed of two interconnected layers of flexible textile, the layers preferably each forming, in sections and both together, a back wall of the body of the multifunctional bag (1), the layers preferably extending continuously over the flap (5) and the back wall of the body of the multifunctional bag (1).

8. The multifunctional bag (1) according to one of the preceding claims, **characterized in that** the holding device (4) has two hooks for engaging over the carrier and preferably each hook has its own latching device, preferably a snap lock, for securing the hook to the carrier.

9. The multifunctional bag (1) according to one of the preceding claims, **characterized in that** the flap (5) has a padding, preferably on at least one side or on both sides.

10. The multifunctional bag (1) according to one of the preceding claims, **characterized in that** the multifunctional bag (1) has a stiffening plate (9) which preferably extends over the entire rear wall of the body of the multifunctional bag (1), wherein the body of the multifunctional bag (1) preferably having a padding on the side of the stiffening plate (9) facing away from the storage compartment (2).

11. The multifunctional bag (1) according to one of the preceding claims, **characterized in that** the flap (5) is inseparably connected to the body of the multifunctional bag (1).

12. The multifunctional bag (1) according to one of the preceding claims, **characterized in that** each carrying strap (3) has a padding (3a), the padding (3a) preferably having a weakening or interruption (3b) to allow buckling of the carrying strap (3) for space-saving arrangement thereof in the second position of the flap (5).

13. The multifunctional bag (1) according to claim 12, **characterized in that** each strap (3) of flexible textile is substantially tubular and the padding (3a) is arranged inside thereof, the weakening or interruption of the padding being achieved by at least one transverse seam (3b) connecting opposite inner walls of the tubular textile.

14. The multifunctional bag (1) according to one of the preceding claims, **characterized in that** the flap (5), in the first position, is flush with an adjacent portion of the body of the multifunctional bag (1) to form, together with the latter, a flat bearing surface on the back of a user for use of the multifunctional bag (1) as a backpack.

15. The multifunctional bag (1) according to one of the preceding claims, **characterized in that** the body of the multifunctional bag (1) and preferably, a stiffening plate (9) in the body of the multifunctional bag (1) has/have at least one recess (8) for receiving the holding device (4) in the first position of the flap (5).

## Revendications

1. Sac multifonction (1), comprenant :
- un corps avec au moins un compartiment de rangement (2),
- des sangles de transport (3) permettant de porter le sac multifonction (1) sur le dos en tant que sac à dos,
- un dispositif de retenue (4) permettant d'installer le sac multifonction (1) en tant que sac de transport au niveau d'un support, en particulier sur un porte-bagages d'un vélo, et
- un rabat (5) fixé au corps et pouvant être déplacé entre une première position et une seconde position, dans lequel, dans la première position, le rabat (5) libère les sangles de transport (3) et recouvre le dispositif de retenue (4) de sorte que le sac multifonction (1) peut être utilisée comme sac à dos, et dans lequel, dans la seconde position, le rabat (5) recouvre les sangles de transport (3) et libère le dispositif de retenue (4) de sorte que le sac multifonction (1) peut être utilisé comme sac de transport, **caractérisé en ce que** les sangles de transport (3) et/ou le dispositif de retenue (4) est/sont fixés au rabat (5).

2. Sac multifonction (1) selon la revendication 1, **caractérisé en ce que** le rabat (5) peut être bloqué au niveau du corps du sac multifonction (1) dans la première position et/ou dans la seconde position, de manière préférée grâce à respectivement une fermeture à glissière (6, 7) ou au moins un aimant (11, 13, 15) et/ou au moins un dispositif d'encliquetage.

3. Sac multifonction (1) selon l'une quelconque des revendications précédentes, **caractérisé en ce que** le rabat (5) est fixé de manière pivotante au corps du sac multifonction (1), de manière préférée autour d'un axe (A) qui s'étend au milieu du dos du sac multifonction (1), dans lequel, dans la première position, le rabat (5) forme de manière particulièrement préférée la moitié inférieure du dos du sac multifonction (1) et, dans la seconde position, forme la moitié supérieure du dos du sac multifonction (1), ou inversement.

4. Sac multifonction (1) selon l'une quelconque des revendications précédentes, **caractérisé en ce que** les sangles de transport (3), de manière préférée leurs extrémités supérieures ou inférieures, et le dispositif de retenue (4) sont fixés sur différents côtés du rabat (5), dans lequel de manière préférée une région des sangles de transport (3) située entre les extrémités supérieure et inférieure peut être bloquée au niveau du corps du sac multifonction (1) et/ou au niveau du rabat (5) grâce à au moins un aimant (16, 17, 18, 19) et/ou au moins un dispositif d'encliquetage.

5. Sac multifonction (1) selon l'une quelconque des revendications précédentes, **caractérisé en ce que,** dans la première position, le rabat (5) forme, conjointement avec le corps du sac multifonction (1), une poche permettant de ranger le dispositif de retenue (4) recouvert, dans lequel de manière préférée un premier côté du rabat (5) forme au moins par sections le côté arrière du sac multifonction (1) et un second côté du rabat (5) se trouve à l'intérieur de ladite poche, et/ou dans lequel, dans la seconde position, le rabat (5) forme, conjointement avec le corps du sac multifonction (1), une poche permettant de ranger les sangles de transport (3) recouvertes, dans lequel de manière préférée le premier côté du rabat (5) se trouve à l'intérieur de ladite poche et le second côté du rabat (5) forme au moins par sections le côté arrière du sac multifonction (1), dans lequel la ou les poche(s) est/sont conçues de manière préférée pour pouvoir être fermées de manière étanche à l'eau, de manière préférée grâce à respectivement une fermeture à glissière (6, 7) ou au moins un aimant (11, 13, 15) et/ou au moins un dispositif d'encliquetage.

6. Sac multifonction (1) selon l'une quelconque des revendications précédentes, **caractérisé en ce que** le rabat (5) présente une plaque de raidissement de manière préférée en plastique ou en métal, dans lequel le dispositif de retenue (4) est de manière préférée relié de manière fixe à ladite plaque de raidissement, de manière particulièrement préférée par complémentarité de forme.

7. Sac multifonction (1) selon l'une quelconque des revendications précédentes, **caractérisé en ce que** le rabat (5) est formé de deux couches de textile flexible reliées entre elles, dans lequel les couches forment, de manière préférée respectivement par sections et à elle deux, une paroi arrière du corps du sac multifonction (1), dans lequel les couches s'étendent de manière préférée de manière continue sur le rabat (5) et sur la paroi arrière du corps du sac multifonction (1).

8. Sac multifonction (1) selon l'une quelconque des revendications précédentes, **caractérisé en ce que** le dispositif de retenue (4) présente deux crochets permettant d'enserrer le support et de manière préférée chaque crochet présente un blocage qui lui est propre, de manière préférée une fermeture à déclic, afin d'immobiliser le crochet au niveau du support.

9. Sac multifonction (1) selon l'une quelconque des revendications précédentes, **caractérisé en ce que** le rabat (5) présente un rembourrage, de manière préférée sur au moins un côté ou sur les deux côtés.

10. Sac multifonction (1) selon l'une quelconque des revendications précédentes, **caractérisé en ce que** le sac multifonction (1) présente une plaque de raidissement (9) qui s'étend de manière préférée sur toute la paroi arrière du corps du sac multifonction (1), dans lequel le corps du sac multifonction (1) présente de manière préférée un rembourrage sur le côté de la plaque de raidissement (9) opposé au compartiment de rangement (2).

11. Sac multifonction (1) selon l'une quelconque des revendications précédentes, **caractérisé en ce que** le rabat (5) est relié de manière inséparable au corps du sac multifonction (1).

12. Sac multifonction (1) selon l'une quelconque des revendications précédentes, **caractérisé en ce que** chaque sangle de transport (3) présente un rembourrage (3a), dans lequel le rembourrage (3a) présente de manière préférée un affaiblissement ou une interruption (3b) afin de permettre, dans la seconde position du rabat (5), un pliage de la sangle de transport (3) en vue d'un agencement de celle-ci économisant la place disponible.

13. Sac multifonction (1) selon la revendication 12, **caractérisé en ce que** chaque sangle de transport (3) en textile flexible est réalisée avec une forme essentiellement tubulaire et le rembourrage (3a) est agencé à l'intérieur de celle-ci, dans lequel l'affaiblissement ou l'interruption du rembourrage est obtenu en reliant les parois intérieures opposées du textile tubulaire grâce à au moins une couture transversale (3b).

14. Sac multifonction (1) selon l'une quelconque des revendications précédentes, **caractérisé en ce que,** dans la première position, le rabat (5) se raccorde au ras d'une section adjacente du corps du sac multifonction (1) afin de former avec celle-ci une surface d'appui plane au niveau du dos d'un utilisateur afin d'utiliser le sac multifonction (1) comme sac à dos.

15. Sac multifonction (1) selon l'une quelconque des revendications précédentes, **caractérisé en ce que** le corps du sac multifonction (1) et de manière préférée une plaque de raidissement (9) présentent dans le corps du sac multifonction (1) au moins un évidement (8) permettant d'accueillir le dispositif de retenue (4) dans la première position du rabat (5).
